# EUROPEAN PATENT SPECIFICATION

(11) **EP 1 482 802 B1**
(45) Date of publication and mention of the grant of the patent: **30.11.2005**
(21) Application number: 03702749.7
(22) Date of filing: 12.02.2003
(51) Int. Cl.: A01N 57/20, A01N 25/30

(54) **GLYPHOSATE FORMULATION**
GLYPHOSAT-FORMULIERUNG
FORMULATION DE GLYPHOSATE

(30) Priority: 26.02.2002 GB 0204482
(43) Date of publication of application: 08.12.2004
(73) Proprietor: Syngenta Limited, Guildford Surrey GU2 7YH (GB)
(72) Inventor: Bean, Michael John, Greensboro, NC 27409 (US); Formstone, Carl Andrew, Syngenta Ltd., Bracknell, Berkshire RG42 6EY (GB); Hopkins, Derek John, CH-4333 Muenchwilen (CH)
(74) Representative: Ward, Steven Paul
(86) International application number: PCT/GB2003/000615
(87) International publication number: WO 2003/071873

(56) References cited:
- US-A- 4 840 659
- US-A- 6 010 979

## Description

This invention relates to a glyphosate formulation and in particular to a high-strength aqueous concentrate formulation of glyphosate.

N-phosphonomethylglycine (referred to herein by the common name glyphosate) is a well-known herbicide, which is generally used as a glyphosate acid anion counterbalanced by a suitable cation. Commercially, trimethylsulphonium and isopropylamine are currently the commonest cations although sodium, potassium, monoethanolamine and ammonium cations are also of interest. Glyphosate can be formulated in a wide variety of liquid and solid compositions designed to cover a range of commercial applications. This invention concerns liquid concentrate formulations, which are designed to be diluted prior to use. Many such liquid concentrates are sold commercially, but there are strong commercial and environmental reasons for seeking to increase the concentration of glyphosate in the aqueous formulation beyond that which is commonly available. It is readily apparent that a high-strength aqueous concentrate formulation provides a given dose of glyphosate in a smaller liquid volume, resulting in significant advantages in terms of reduced transport, storage and handling costs and reduced and more convenient container disposal.

It is well understood that in commercial practice it is necessary to enhance the activity of glyphosate by the use of one or more adjuvants. One commonly used class of adjuvants are surfactants, and many effective individual surfactants or mixed surfactant systems have been published in the literature. It is possible to add a desired surfactant separately into a tank mix at the same time that the aqueous glyphosate concentrate is diluted, and the surfactant can thus be omitted from the concentrate and added separately at the tank mix stage. Clearly however the addition of a surfactant at the tank mix stage constitutes an additional step prior to spraying the herbicide and requires the user to undertake accurate measurement of mixing volumes to ensure the correct proportions in the final product. There is a need therefore for high-strength glyphosate concentrates in which an effective proportion of a surfactant is "built-in" to the composition. The term "built-in" as used herein indicates a composition in which the required primary adjuvants are contained within a physically stable concentrate composition and do not have to be added during the tank mix stage. This does not of course preclude the operator adding further adjuvants during tank mix if desired, but there is no necessity for the addition of further adjuvants. The difficulties of providing effective high-strength glyphosate concentrates containing adjuvant systems are considerable, since such concentrates have to be physically stable over extended storage at the possible extremes of ambient temperatures likely to be encountered in commercial usage.

One particular stability problem arises when alcohol ethoxylates are used as adjuvants for conventional glyphosate formulations in built-in concentrates. Although alcohol ethoxylates are good surfactants and effective adjuvants, there is a tendency for them to separate out from concentrated glyphosate solutions at higher temperatures, for example above 50°C to 60°C. Such compositions, for example compositions containing glyphosate in association with a cation such as isopropylamine, trimethylsulphonium, monoethanolamine, potassium, sodium or ammonium are strong electrolytes, which tend to give rise to compatibility problems with alcohol ethoxylates. This can lead to problems when glyphosate concentrates are stored at, or exposed to, high temperatures, for example by being left in a vehicle in the sun, or in hot climates. One problem caused by separation of the adjuvant is that the herbicidal effectiveness of the composition is reduced in those parts of the composition where there is a reduced level of adjuvant. There may also be an increased tendency to foaming in those parts of the composition where there is an increased level of the adjuvant, because of the adjuvant's inherent surfactant properties. Furthermore, once separation occurs, it may not be practicable to reincorporate the adjuvant, particularly in high volume containers or storage tanks, which can be up to 100 000 litres in volume and which it would be quite impractical to agitate to the required extent.

In WO 99/09822 it is proposed to mitigate compatibility problems arising from the use of alcohol ethoxylates in the presence of an agrochemical electrolyte such as glyphosate salts by forming a structured (gel) system by means on the interaction of an alkyl glycoside and a co-surfactant. Whilst such a system acts to overcome compatibility problems even if phase separation does occur, the co-surfactant will tend to add to the cost of the formulation and it is highly desirable to provide a system in which phase separation does not occur in the first place.

We have now found that the glyphosate when associated with the butylamine cation can be used in place of the more conventional glyphosate presentations to provide stable "built-in" concentrate compositions despite the presence of alcohol ethoxylate adjuvants. We have found that such compositions are temperature-stable such that the adjuvant phase resists separating out from the composition at up to 40°C or higher such as 50°C.

According to the present invention there is provided a liquid high-strength aqueous glyphosate concentrate comprising butylamine cation and glyphosate anion in the presence of an alcohol ethoxylate adjuvant.

The concentrate is preferably presented as a single phase.

As used herein, the term "high-strength" aqueous glyphosate concentrate indicates a concentrate in which the glyphosate concentration is greater than 240 g/l based on glyphosate acid content, for example from 240 to 400 g/l. An especially preferred concentration is from 340 to 380 g/l based on glyphosate acid. It should be noted that, unless otherwise stated, all concentrations of glyphosate are given herein in terms of the percentage by weight of glyphosate acid even though the glyphosate anion is balanced by a butylamine cation.

The composition of the present invention comprises butylamine cation and glyphosate anion. Each glyphosate anion will normally be substantially matched with one butylamine cation (the monobutylamine salt of glyphosate), although excess glyphosate anion or butylamine cation may be used if desired. Alternatively other cationic species, including the conventional isopropylamine, trimethylsulphonium, sodium, potassium, monoethanolamine or ammonium cations, may be present in addition to the butylamine cation.

The alcohol ethoxylate is preferably a linear or branched chain saturated or unsaturated aliphatic or aromatic alcohol and can have one or more hydroxy groups. The alcohol ethoxylate is preferably obtained by ethoxylation of a linear or branched chain aliphatic mono alcohol having a chain length of from 8 to 20 carbon atoms or a mixture of such alcohols having an average chain length of from 8 to 20 and more preferably from 10 to 18 carbon atoms. A primary alcohol is preferred. An example of an alcohol ethoxylate for use in the present invention is that derived from a mixture comprising a primary alcohol containing 13 carbon atoms and a primary alcohol containing 15 carbon atoms. The ratio of the C13 alcohol to the C15 alcohol is typically from 30:70 to 70:30 and the mixture generally contains both linear and branched alcohols, for example, about 50% by weight of linear alcohols. An example of an ethoxylated aromatic alcohol is nonyl-phenol ethoxylate, although primary aliphatic alcohol ethoxylates are generally preferred.

The mean degree of ethoxylation (mean molar ethylene oxide content) is preferably from 2 to 50 moles of ethylene oxide per mole of alcohol, and especially from 10 to 20 moles of ethylene oxide per mole of alcohol. The most efficacious degree of ethoxylation can vary somewhat depending upon the weed species being treated. It is therefore possible either to select the most efficacious mean degree of ethoxylation for a specific target weed or to seek a mean degree of ethoxylation which is efficacious over a broad range of species. In general we have found that effective treatment over a broad range of species is obtained when the mean degree of ethoxylation is from 11 to 18 moles of ethylene oxide per mole of alcohol. There may in some instances be an advantage in obtaining a broad species response by using a composition having a broad distribution of ethylene oxide content around the mean value. The appropriate mean ethylene oxide content can if desired be obtained by mixing two or more commercially available alcohol ethoxylates having various ethylene oxide contents in the appropriate ratio. This has the dual advantage of enabling a desired mean ethylene oxide content to be achieved precisely and also of ensuring that a broad distribution of ethylene oxide contents is present. Thus for example a mean ethylene oxide content of 15 moles of ethylene oxide per mole of alcohol can be achieved by mixing the commercially available alcohol ethoxylate SYNPERONIC A1 (SYNPERONIC is a trademark of IMPERIAL CHEMICAL INDUSTRIES PLC) which has a mean ethylene oxide content of 11 with SYNPERONIC A20 (which has a mean ethylene oxide content of 20) in the ratio 3 to 2.

A number of suitable alcohol ethoxylates are commercially available including for example the SYNPERONIC A series having a range of ethylene oxide contents (indicated by the number after the "A") and based on a primary C₁₃-C₁₅ alcohol containing about 50% by weight linear alcohol, the remainder being mainly mono-branched; CIRRASOL ALN-WF (a mixture of C16 - C18 linear alcohols with a mean ethylene oxide content of 17); BRIJ 96 and 98 based on an unsaturated C₁₈ linear alcohol and having a mean ethylene oxide content of 10 and 20 respectively; Mergital LM a C₁₂/C₁₄/C₁₆ alcohol ethoxylate (11EO for Mergital LM 11 and 17 EO for Mergital LM 17); and RENEX 30 based on a branched C₁₃ alcohol having a mean ethylene oxide content of 12.

Preferably the content of the alcohol ethoxylate in the aqueous concentrate is from about 20 to 250g/l. In general, the higher the concentration of the glyphosate present in the composition, the lower the concentration of alcohol ethoxylate which can be effectively built-in to the composition without the risk of encountering stability problems under extreme conditions. The concentration of alcohol ethoxylate, which can be effectively built-in to the composition, will also depend to some extent on any other components of the compositions such as the presence of a co-adjuvant. Since it is normally commercially desirable for the glyphosate concentration to be relatively high, for example about 340 to 380 g/l, it is preferred that the alcohol ethoxylate concentration is from 20 to 200 g/l and especially from 40 to 150 g/l. We have found that concentrations of alcohol ethoxylate within such preferred ranges provide compositions having excellent stability in the presence of a high concentration of glyphosate, whilst at the same time containing sufficient alcohol ethoxylate to provide the desired level of bioperformance enhancement. We have found in general that compositions of the present invention are able to support a higher content of alcohol ethoxylate than would be the case for corresponding compositions containing conventional cations.

Compositions of the present invention may also comprise a further adjuvant in addition to the alcohol ethoxylate. Suitably the co-adjuvant functions in a different manner from the alcohol ethoxylate to provide a complementary adjuvancy effect. For example it is preferred that the compositions of the present invention also comprise an alkylglycoside. The alkylglycoside for use in the present invention can be obtained by the reaction of alkanols with glucose or other mono- or di- or polysaccharides. As used herein the term "alkylglycoside" includes an alkylmonoglycoside and an alkylpolyglycoside. Preferred alkylglycosides for use in the present invention are alkylglucosides obtained by the reaction of glucose with a straight or branched chain alkanol or mixture of alkanols, for example a mixture of alkanols containing 7 to 18, preferably 7 to 16 carbon atoms for example 8 to 10 carbon atoms. The number of glycose groups per alkyl group in the molecule can vary and alkyl mono- or di- or polyglucose or saccharide derivatives are possible. Commercial alkylpalyglucosides usually contain a mixture of derivatives having an average number of glycose groups per alkyl group. Thus alkylglycosides have the general formula (I), 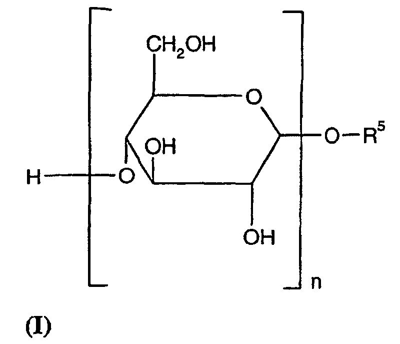 , wherein n is the degree of polymerisation and is typically within the range from 1 to 3, for example from 1 to 2, and R⁵ is a branched or straight chain alkyl group having from 4 to 18 carbon atoms or a mixture of alkyl groups having an average value within the given range. Typical of alkylglycosides is the product commercially available under the trade names AL2042 (Imperial Chemical Industries PLC) and AGRIMUL PG2067 (Henkel Corp) wherein n is an average of 1.7 and R⁵ is a mixture of octyl (45%) and decyl (55%), the product commercially available under the trade name AGRIMUL PG2069 (Henkel Corp) wherein n is an average of 1.6 and R⁵ is a mixture of nonyl (20%), decyl (40%) and undecyl (40%) and the product commercially available under the trade name BEROL AG6202 (Akzo Nobel) which is 2-ethyl-1-hexylglycoside.

It is a particular advantage of the alkylglycoside surfactant that it is compatible with the high ionic-strength electrolyte composition of the present invention.

Preferably the content of the alkylglycoside surfactant system in the aqueous concentrate is from 0 to about 250g/l. The content of the alkylglycoside surfactant is preferably from 20 to 250 g/l and especially from 40 to 150 g/l. It will be appreciated that the exact choice of the concentration of alkylglycoside selected will depend to some extent on the concentration of glyphosate and alcohol ethoxylate present in the composition.

A proportion of the alkylglycoside may if desired be replaced by a cationic surfactant such as an alkoxylated alkylamine or a quaternary surfactant and in some circumstances an increase in biological activity can be observed thereby.

As is conventional practice, an antifoam can be added. Numerous antifoams are known in the art and commercially available antifoams operate at very low concentrations (for example less than 5 g/l) and hence do not have a major impact on the loading of the composition.

Other conventional additives such as humectants, activity enhancers (such as inorganic ammonium salts anti-freeze agents, wetters, or other additional surfactants can be added if desired. Similarly, additional water-soluble herbicides or other agrochemicals such as fungicides and insecticides can be incorporated if desired.

Co-surfactants acting as structuring agents and/or cationic surfactants such as those listed in WO 99/09822 may be added if desired but it is a particular advantage of the composition of the present invention that the composition is stable at relatively high glyphosate concentration and at relatively high ambient temperature without the need to add such structuring agents and/or cationic surfactants. This in turn provides greater "capacity" in the formulation to accommodate additional adjuvants that may provide desirable bioperformance enhancement.

When diluted for use, compositions of the present invention are active against a broad range of weed species including monocotyledonous and dicotyledonous species. The compositions are suitably applied directly to unwanted plants (post-emergence application).

Thus according to a further aspect of the present invention there is provided a process of severely damaging or killing unwanted plants which comprises diluting a concentrated composition of the present invention and applying to the plants a herbicidally effective amount of a said diluted composition.

The rate of application of the composition of the invention will depend on a number of factors including, for example, the identity of the plants whose growth is to be inhibited and whether the compound is to be applied for foliage or root uptake. As a general guide, however, an application rate of from 0.001 to 20 kilograms per hectare is suitable while from 0.025 to 10 kilograms per hectare may be preferred.

The compositions of the present invention can be made by mixing the components in the desired proportions. The particular combination of ions in the composition of the present invention can be obtained from a range of different starting materials. The order of addition is not particularly important. Thus, butylamine can be added to glyphosate acid in the presence of the alcohol ethoxylate, and optionally any co-adjuvant.

Compositions of the present invention can also be provided in a diluted and ready-to-use form but is suitably a concentrate. Additional adjuvants suitable for ready-to-use formulations can also be added e.g. antifreeze, polymers and dyes.

The invention is illustrated by the following Examples in which all parts and percentages are by weight unless otherwise stated.

### EXAMPLE 1

A composition was prepared consisting of the monobutylamine salt of glyphosate at a concentration equivalent of 360 g/l glyphosate acid, AGRIMUL PG2067 (86 g/l of a 70% w/w solution of alkylpolyglycoside in water) and MERGITAL LM 11 (50 g/l of a 99.7% w/w solution of alcohol ethoxylate in water). A homogeneous single-phase composition was formed. The composition was stored respectively at ambient temperature (taken as 20°C), 50°C and 54°C for a period of 14 days. No indication of phase separation was observed.

### EXAMPLE 2

The procedure of Example 1 was repeated with a composition consisting of the monobutylamine salt of glyphosate at a concentration equivalent of 360 g/l glyphosate acid, AGRIMUL PG2067 (115 g/l of a 70% w/w solution of alkylpolyglycoside in water) and MERGTTAL LM 11 (115 g/l of a 99.7% w/w solution of alcohol ethoxylate in water). A homogeneous single phase composition was formed. The composition was stored respectively at ambient temperature (taken as 20°C), 50°C and 54°C for a period of 14 days. No indication of phase separation was observed.

### COMPARISON

The procedure of Example 2 above was repeated using the same concentrations of alkylpolyglycoside and alcohol ethoxylate except that the butylamine salt of glyphosate was replaced respectively by the monoethanolamine salt and the potassium salt of glyphosate at the equivalent concentration of 360 g/l glyphosate acid. Both the ethanolamine and potassium compositions underwent phase separation when stored at ambient temperature for 14 days.

### EXAMPLE 3

The procedure of Example 2 was repeated using the same concentrations of alkylpolyglycoside, alcohol ethoxylate , except that 30 g/l of a structuring agent (2-ethyl-1-hexanol) was added according to the procedure of WO 99/09822. Whilst the addition of such a structuring agent is unnecessary (in that the corresponding formulation of Example 2 was stable without the addition of a structuring agent), the addition of the 2-ethyl-1-hexanol had no adverse effect and the composition was stable when stored at ambient temperature (taken as 20°C), 50°C and 54°C for a period of 14 days.

### COMPARISON

The procedure of Example 3 was repeated using the same concentrations of alkylpolyglycoside, alcohol ethoxylate and structuring agent except that the butylamine salt of glyphosate was replaced respectively by the monoethanolamine salt and the potassium salt of glyphosate at the equivalent concentration of 360 g/l glyphosate acid. Despite the presence of structuring agent, both the ethanolamine and potassium compositions underwent phase separation when stored at ambient temperature for 14 days

### EXAMPLE 4

The procedure of Example 3 was repeated using the same concentrations of alkylpolyglycoside, alcohol ethoxylate and structuring agent (2-ethyl-1-hexanol) except that 10 g/l of a cationic surfactant ARQUAD 16-29 was added according to the further procedure of WO 99/09822. ARQUAD 16-29 is a 29% by weight solution of hexadecyl trimethyl ammonium chloride in water. ARQUAD is a trademark of Akzo Nobel. Whilst the addition of such a structuring agent/cationic surfactant is unnecessary (in that the corresponding formulation of Example 2 was stable without the addition of a structuring agent/cationic surfactant system), the addition of the 2-ethyl-1-hexanol and cationic surfactant had no adverse effect and the composition was stable when stored at ambient temperature (taken as 20°C), 50°C and 54°C for a period of 14 days.

### COMPARISON

The procedure of Example 4 was repeated using the same concentrations of alkylpolyglycoside, alcohol ethoxylate, structuring agent and cationic surfactant except that the butylamine salt of glyphosate was replaced by the monoethanolamine salt of glyphosate at the equivalent concentration of 360 g/l glyphosate acid. In the presence of structuring agent and cationic surfactant, the ethanolamine composition remained stable at ambient temperature but underwent phase separation when stored at 50°C for 14 days.

It was found necessary to increase the concentration of 2-ethyl-1-hexanol to 50 g/l (in the presence of 10 g/l ARQUAD 16-29) before the ethanolamine composition was stable both at ambient temperature and 50°C/54°C. Even using these increased proportions of structuring agent and cationic surfactant, the potassium salt underwent phase separation at ambient temperature.

## Claims

1. A liquid high-strength aqueous glyphosate concentrate comprising butylamine cation and glyphosate anion in the presence of an alcohol ethoxylate adjuvant wherein the glyphosate concentration is greater than 240 g/l based on glyphosate acid content.

2. A concentrate according to claim 1 wherein the glyphosate concentration is from 240 to 400 g/l based on glyphosate acid.

3. A concentrate according to claim 1 wherein the glyphosate concentration is from 340 to 380 g/l based on glyphosate acid.

4. A concentrate according to claim 1 wherein the alcohol ethoxylate is obtained by ethoxylation of a linear or branched chain aliphatic mono alcohol having a chain length of from 8 to 20 carbon atoms or a mixture of such alcohols having an average chain length of from 8 to 20 carbon atoms.

5. A concentrate according to claim 4 wherein the alcohol ethoxylate is obtained by ethoxylation of a linear or branched chain aliphatic mono alcohol having a chain length of from 10 to 18 carbon atoms or a mixture of such alcohols having an average chain length of from 10 to 18 carbon atoms.

6. A concentrate according to claim 4 or claim 5 wherein the alcohol from which the alcohol ethoxylate is derived is a primary alcohol.

7. A concentrate according to claim 6 wherein he alcohol from which the alcohol ethoxylate is derived is a mixture comprising a primary alcohol containing 13 carbon atoms and a primary alcohol containing 15 carbon atoms.

8. A concentrate according to any of the preceding claims in which the mean degree of ethoxylation is from 2 to 50 moles of ethylene oxide per mole of alcohol.

9. A concentrate according to claim 8 in which the mean degree of ethoxylation is from 10 to 20 moles of ethylene oxide per mole of alcohol.

10. A concentrate according to claim 8 in which the mean degree of ethoxylation is from 11 to 18 moles of ethylene oxide per mole of alcohol

11. A concentrate according to any of the preceding claims containing from 20 to 250g/l of alcohol ethoxylate.

12. A concentrate according to claim 3 containing from 20 to 200 g/l of alcohol ethoxylate.

13. A concentrate according to claim 12 containing from 40 to 150 g/l of alcohol ethoxylate.

14. A concentrate according to any of the preceding claims comprising a further adjuvant in addition to the alcohol ethoxylate wherein said further adjuvant is an alkylglycoside.

15. A concentrate according to claim 14 wherein the alkylglycoside is obtained by the reaction of glucose with a straight or branched chain alkanol or mixture of alkanols, for example a mixture of alkanols containing 7 to 18 carbon atoms.

16. A concentrate according to claim 14 or 15 wherein the content of the alkylglycoside surfactant is from 20 to 250 g/l.

17. A concentrate according to claim 16 wherein the content of the alkylglycoside surfactant is from 40 to 150 g/l.

18. A process of severely damaging or killing unwanted plants which comprises diluting a concentrate according to any of the preceding claims and applying to the plants a herbicidally effective amount of said diluted concentrate.

## Patentansprüche

1. Flüssiges hochkonzentriertes wässriges Glyphosatkonzentrat, das Butylaminkationen und Glyphosatanionen in Gegenwart eines Alkoholethoxylat-Hilfsstoffs umfasst, worin die Glyphosatkonzentration größer als 240 g/l auf Basis des Glyphosatsäuregehalts ist.

2. Konzentrat gemäß Anspruch 1, worin die Glyphosatkonzentration 240 bis 400 g/l auf Basis von Glyphosatsäure ist.

3. Konzentrat gemäß Anspruch 1, worin die Glyphosatkonzentration 340 bis 380 g/l auf Basis von Glyphosatsäure ist.

4. Konzentrat gemäß Anspruch 1, worin das Alkoholethoxylat durch Ethoxylierung eines linearen oder verzweigtkettigen aliphatischen Monoalkohols mit einer Kettenlänge von 8 bis 20 Kohlenstoffatomen oder einer Mischung aus solchen Alkoholen mit einer durchschnittlichen Kettenlänge von 8 bis 20 Kohlenstoffatomen erhalten wird.

5. Konzentrat gemäß Anspruch 4, worin das Alkoholethoxylat durch Ethoxylierung eines linearen oder verzweigtkettigen aliphatischen Monoalkohols mit einer Kettenlänge von 10 bis 18 Kohlenstoffatomen oder einer Mischung aus solchen Alkoholen mit einer durchschnittlichen Kettenlänge von 10 bis 18 Kohlenstoffatomen erhalten wird.

6. Konzentrat gemäß Anspruch 4 oder 5, worin der Alkohol, aus dem das Alkoholethoxylat stammt, ein primärer Alkohol ist.

7. Konzentrat gemäß Anspruch 6, worin der Alkohol, aus dem das Alkoholethoxylat stammt, eine Mischung ist, die einen primären Alkohol, der 13 Kohlenstoffatome enthält, und einen primären Alkohol, der 15 Kohlenstoffatome enthält, umfasst.

8. Konzentrat gemäß einem der vorhergehenden Ansprüche, worin der mittlere Ethoxylierungsgrad 2 bis 50 mol Ethylenoxid pro Mol Alkohol ist.

9. Konzentrat gemäß Anspruch 8, worin der mittlere Ethoxylierungsgrad 10 bis 20 mol Ethylenoxid pro Mol Alkohol ist.

10. Konzentrat gemäß Anspruch 8, worin der mittlere Ethoxylierungsgrad 11 bis 18 mol Ethylenoxid pro Mol Alkohol ist.

11. Konzentrat gemäß einem der vorhergehenden Ansprüche, das 20 bis 250 g/l an Alkoholethoxylat enthält.

12. Konzentrat gemäß Anspruch 3, das 20 bis 200 g/l an Alkoholethoxylat enthält.

13. Konzentrat gemäß Anspruch 12, das 40 bis 150 g/l an Alkoholethoxylat enthält.

14. Konzentrat gemäß einem der vorhergehenden Ansprüche, das einen weiteren Hilfsstoff zusätzlich zum Alkoholethoxylat umfasst, worin der weitere Hilfsstoff ein Alkylglycosid ist.

15. Konzentrat gemäß Anspruch 14, worin das Alkylglycosid durch die Reaktion von Glucose mit einem linearen oder verzweigtkettigen Alkanol oder einer Mischung aus Alkanolen, z.B. einer Mischung aus Alkanolen, die 7 bis 18 Kohlenstoffatome enthalten, erhalten wird.

16. Konzentrat gemäß Anspruch 14 oder 15, worin der Gehalt des Alkylglycosid-Tensids 20 bis 250 g/l ist.

17. Konzentrat gemäß Anspruch 16, worin der Gehalt des Alkylglycosid-Tensids 40 bis 150 g/l ist.

18. Verfahren zur ernsthaften Schädigung oder Abtötung unerwünschter Pflanzen, welches das Verdünnen eines Konzentrats gemäß einem der vorhergehenden Ansprüche und das Ausbringen einer herbizid wirksamen Menge des verdünnten Konzentrats auf die Pflanzen umfasst.

## Revendications

1. Concentré liquide de glyphosate aqueux à concentration élevée comprenant le cation de butylamine et l'anion de glyphosate en présence d'un adjuvant d'éthoxylate d'alcool dans lequel la concentration de glyphosate est supérieure à 240 g/l sur la base de la teneur en glyphosate acide.

2. Concentré selon la revendication 1 dans lequel la concentration de glyphosate est de 240 à 400 g/l sur la base du glyphosate acide.

3. Concentré selon la revendication 1 dans lequel la concentration de glyphosate est de 340 à 380 g/l sur la base du glyphosate acide.

4. Concentré selon la revendication 1 dans lequel l'éthoxylate d'alcool est obtenu par éthoxylation d'un monoalcool aliphatique à chaîne linéaire ou ramifiée ayant une longueur de chaîne de 8 à 20 atomes de carbone ou un mélange de tels alcools ayant une longueur de chaîne moyenne de 8 à 20 atomes de carbone.

5. Concentré selon la revendication 4 dans lequel l'éthoxylate d'alcool est obtenu par éthoxylation d'un monoalcool aliphatique à chaîne linéaire ou ramifiée ayant une longueur de chaîne de 10 à 18 atomes de carbone ou un mélange de tels alcools ayant une longueur de chaîne moyenne de 10 à 18 atomes de carbone.

6. Concentré selon la revendication 4 ou la revendication 5 dans lequel l'alcool à partir duquel l'éthoxylate d'alcool est dérivé est un alcool primaire.

7. Concentré selon la revendication 6 dans lequel l'alcool à partir duquel l'éthoxylate d'alcool est dérivé est un mélange comprenant un alcool primaire contenant 13 atomes de carbone et un alcool primaire contenant 15 atomes de carbone..

8. Concentré selon l'une quelconque des revendications précédentes dans lequel le degré moyen d'éthoxylation est de 2 à 50 moles d'oxyde d'éthylène par mole d'alcool.

9. Concentré selon la revendication 8 dans lequel le degré moyen d'éthoxylation est de 10 à 20 moles d'oxyde d'éthylène par mole d'alcool.

10. Concentré selon la revendication 8 dans lequel le degré moyen d'éthoxylation est de 11 à 18 moles d'oxyde d'éthylène par mole d'alcool.

11. Concentré selon l'une quelconque des revendications précédentes contenant de 20 à 250 g/l d'éthoxylate d'alcool.

12. Concentré selon la revendication 3 contenant de 20 à 200 g/l d'éthoxylate d'alcool.

13. Concentré selon la revendication 12 contenant de 40 à 150 g/l d'éthoxylate d'alcool.

14. Concentré selon l'une quelconque des revendications précédentes comprenant un adjuvant supplémentaire en plus de l'éthoxylate d'alcool dans lequel ledit adjuvant supplémentaire est un alkylglycoside.

15. Concentré selon la revendication 14 dans lequel l'alkylglycoside est obtenu par la réaction de glucose avec un alcanol à chaîne linéaire ou ramifiée ou un mélange d'alcanols, par exemple, un mélange d'alcanols contenant de 7 à 18 atomes de carbone.

16. Concentré selon la revendication 14 ou 15 dans lequel la teneur en agent tensioactif alkylglycoside est de 20 à 250 g/l.

17. Concentré selon la revendication 16 dans lequel la teneur en agent tensioactif alkylglycoside est de 40 à 150 g/l.

18. Procédé pour endommager gravement ou tuer des plantes indésirables qui comprend la dilution d'un concentré selon l'une quelconque des revendications précédentes et l'application sur les plantes d'une quantité herbicide efficace dudit concentré dilué.
